Europäisches Patentamt

**European Patent Office**

**Office européen des brevets**

(11) Veröffentlichungsnummer: **0 268 817**
**B1**

(12) **EUROPÄISCHE PATENTSCHRIFT**

(45) Veröffentlichungstag der Patentschrift:
04.04.90

(21) Anmeldenummer: **87115286.4**

(22) Anmeldetag: **19.10.87**

(51) Int. Cl.⁴: **F16B 39/02, B21D 39/20,**
**B25B 27/00, G21C 3/32**

(54) Verdrehungssicheres mechanisches Verbindungselement und Werkzeug zur Sicherung des Verbindungselementes.

(30) Priorität: 31.10.86 DE 3637111
22.07.87 DE 3724307

(43) Veröffentlichungstag der Anmeldung:
01.06.88 Patentblatt 88/22

(45) Bekanntmachung des Hinweises auf die Patenterteilung:
04.04.90 Patentblatt 90/14

(84) Benannte Vertragsstaaten:
BE CH DE ES FR IT LI NL SE

(56) Entgegenhaltungen:
EP-A- 0 026 141
EP-A- 0 059 316
DE-U- 8 620 893
US-A- 2 341 278
US-A- 3 657 797
US-A- 4 030 975

(73) Patentinhaber: **Siemens Aktiengesellschaft,**
**Wittelsbacherplatz 2, D-8000 München 2(DE)**

(72) Erfinder: **Kätscher, Erich, Rosenbacher Strasse 24,**
**D-8525 Marloffstein(DE)**
Erfinder: **Hümmeler, Alexander, Dipl.-Ing.,**
**Kaibachweg 7, D-8551 Röttenbach(DE)**
Erfinder: **Hegenberger, Harald, Tannenweg 11,**
**D-8555 Adelsdorf/Aisch(DE)**
Erfinder: **Förner, Siegfried, Leipziger Strasse 69,**
**D-8520 Erlangen(DE)**
Erfinder: **Rabe, Günter, Dipl.-Ing., Kettelerstrasse 32a,**
**D-8526 Bubenreuth(DE)**

ACTORUM AG

**Beschreibung**

Die vorliegende Erfindung bezieht sich auf ein mechanisches Verbindungselement für zwei miteinander zu verbindende Bauteile, bei dem ein mit einem Kopf versehener Bolzen das erste Bauteil durchdringt und an dem zweiten Bauteil verankert ist, wobei der Kopf des Verbindungselementes, an dem ein Sicherungsnapf angeformt ist, in einer mit einer Vertiefung versehenen Aussparung des ersten Bauteils versenkt angeordnet ist und durch Ausbiegen des Sicherungsnapfes in die Vertiefung gegen Verdrehen und axiale Verlagerung sicherbar ist. Derartige Verbindungselemente werden insbesondere in der Reaktortechnik eingesetzt, wo gewährleistet sein muß, daß die mechanische Verbindung trotz Sicherung fernbedient gelöst werden kann, aber verhindert werden muß, daß eine gebrochene Schraube bzw. ein Teil des Schraubenkopfes aus dem Sitz herausfällt und zu einer Betriebsstörung führt.

Ein Verbindungselement der vorgenannte Art ist aus der EP-A 0 026 141 bekannt. Dort ist eine verdrehungssichere Zylinderschraube angegeben, bei der an dem mit einem Betätigungsschlitz versehenen Kopf ein Sicherungsnapf angeformt ist. Im eingeschraubten Zustand ist der Kopf der Schraube in einer Aussparung versenkt angeordnet, in der eine umlaufende Hohlkehle und kegelförmige Erweiterungen vorgesehen sind, in die der Sicherungsnapf mittels eines Schlagbolzens ausgebogen wird. Durch die axialen Stöße beim Sicherungsvorgang werden Stauchkräfte auf den Kopf der Zylinderschraube ausgeübt. Da beim Sicherungsvorgang zwar der Kopf gegen Verdrehen gesichert, aber durch das Ausbiegen des Sicherungsnapfes der Rand nach Art einer Tangente in die Hohlkehle eingezogen wird, entsteht nur ein loser Untergriff. Bricht der Kopf, so führt er durch die Strömung hervorgerufene Rüttelbewegungen aus und fällt nach einiger Zeit heraus. Ferner besteht die Gefahr, daß der Schraubenkopf an der durch den Schlitz geschwächten Stelle bricht und die Kopfteile herausfallen. Dies führt zu einer Betriebsstörung, wenn z.B. die Teile in das Brennelement wandern und dieses beim Ziehen sperren. Darüber hinaus müssen bei der bekannten Ausführung bei einem nachträglichen Austausch einer durch Verschweißen hergestellten Sicherung der Schraube gegen die Zylinderschraube mit Sicherungsnapf in der Aussparung für den Schraubenkopf eine umlaufende Hohlkehle und mehrere kegelförmige Erweiterungen eingearbeitet werden. Diese Arbeiten erfordern - auch wenn sie im Zusammenhang mit Wiederholungsprüfungen ausgeführt werden - einen großen Zeitaufwand, da mehrere unterschiedliche Vertiefungen fernbedient mit einer vorgegebenen Genauigkeit hergestellt werden müssen.

Der Erfindung liegt die Aufgabe zugrunde, ein verdrehungssicheres Verbindungselement anzugeben, bei dem ein Lösen und Herausfallen eines gebrochenen Teiles des Verbindungselements mit einfachen Mitteln vermieden werden kann.

Diese Aufgabe wird bei einem verdrehungssicheren mechanischen Verbindungselement der eingangs genannten Art erfindungsgemäß dadurch gelöst, daß der Kopf als Mehrkant ausgebildet ist und daß die Vertiefung durch mindestens eine topfförmige Tasche gebildet ist, wobei durch Ausbiegen wenigstens eines Teiles des Sicherungsnapfes in die Tasche ein Formschluß herstellbar ist.

Auf diese Weise wird die Gefahr, daß der Kopf bricht, vermindert und eine Wiederholungsprüfung mit Ultraschallsonden erleichtert, da eine Prüfung des Verbindungselementes in einfacher Weise von der Stirnseite her möglich ist. Das erfindungsgemäße Verbindungselement erfordert auch beim nachträglichen Einbau oder einem Ersatz eines bekannten Verbindungselements nur das Abtragen von kleinen Mengen an Material und eine geringe Genauigkeit für das Herstellen der Taschen (z.B. durch Einerodieren), so daß die erforderlichen Arbeiten bei kleinem Zeitaufwand während einer Revision ausgeführt werden können. Das mechanische Verbindungs element kann also nachträglich wesentlich einfacher und schneller montiert werden als das bekannte Verbindungselement.

Das mechanische Verbindungselement kann als Schraube oder als Bolzen mit Mutter ausgebildet sein.

Es ist vorteilhaft, zur Sicherung des Verbindungselements ein Werkzeug zu verwenden, das einen zwischen dem Mehrkant und dem Sicherungsnapf axial einführbaren Führungsteil und einen radial ausschwenkbare Biegenase aufweist. Auf diese Weise können beim Ausbiegen des Sicherungsnapfes im Gegensatz zur bekannten Ausführung allmählich ansteigende radiale Kräfte ausgeübt werden, so daß axiale Stöße und Stauchkräfte auf den Kopf des Verbindungselements sowie Rückstoßkräfte auf das Werkzeug vermieden werden. Dadurch werden Beanspruchungen des Verbindungselements, die zu einem Abriß führen können, weiter verringert.

Die Erfindung wird im folgenden anhand der Zeichnung näher erläutert. Darin zeigen:

FIG 1 einen Schnitt durch eine mechanische Verbindung, bei der zwei Bauteile mittels einer Schraube zusammengehalten sind,

FIG 2 eine Draufsicht auf die in FIG 1 dargestellte Verbindung,

FIG 3 einen Schnitt durch eine andere mechanische Verbindung, bei der zwei Bauteile mittels eines Stehbolzens und einer Mutter verbunden sind,

FIG 4 einen Schnitt durch ein weiteres Verbindungselement,

FIG 5 ein Werkzeug zur Sicherung des Verbindungselements vor dem Aufsetzen auf eine Schraube und

FIG 6 das in FIG 5 gezeigte Werkzeug in Arbeitsstellung.

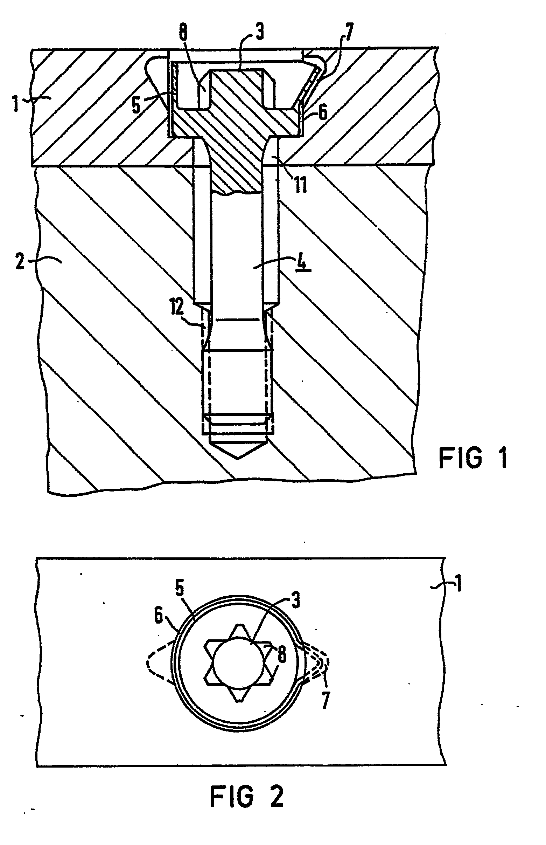

In FIG 1 ist mit 1 ein erstes Bauteil bezeichnet, das mittels eines mechanischen Verbindungselementes, das als Schraube ausgebildet ist, mit einem Bauteil 2 verbunden ist. Dabei durchdringt der mit einem Kopf 3 versehene Gewindebolzen 4 eine Öffnung 11 des ersten Bauteils 1 und ist in einer Gewindebohrung 12 des zweiten Bauteils 2 verankert. Der Kopf 3 des Verbindungselementes ist im ersten Bauteil 1 in einer Aussparung 6 (Senkung) des Bauteils 1 versenkt angeordnet und trägt einen Sicherungsnapf 5, dessen Boden unten an den Kopf 3 des Verbindungselementes angeformt ist. Dabei umgibt der Sicherungsnapf den Mehrkant mit Abstand.

In der Aussparung 6 ist mindestens eine topfförmige Tasche 7 vorgesehen (siehe auch FIG 2), in die ein Teil des Sicherungsnapfes zum Herstellen eines Formschlusses ausbiegbar ist, so daß der Gewindebolzen 4 verdrehungssicher gehalten wird und bei einem eventuellen Bruch nicht herausfallen kann. Durch Anordnen zweier gegenüberliegender Taschen 7 wird auch ein gebrochener Schraubenkopf vor dem Ausfallen gesichert.

Der Kopf 3 des als Schraube ausgebildeten Verbindungselementes ist als Mehrkant ausgebildet, der sternförmig angeordnete Rippen 8 besitzt. Dadurch wird ein gutes Anziehen der Schraube ermöglicht. Der Durchmesser des Mehrkant ist gleich oder größer als der Durchmesser des Bolzens 4. Diese Ausbildung gestattet bei einer erhöhten mechanischen Stabilität des Kopfes eine Ultraschallprüfung der Schraube in besonders einfacher Weise von der Stirnseite her.

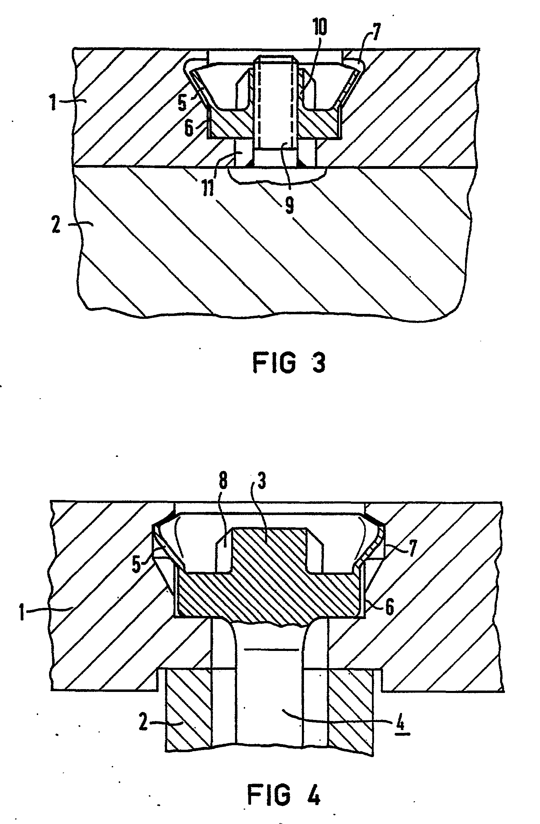

Wie FIG 3 zeigt, kann das mechanische Verbindungselement auch ein Gewindebolzen 9 sein, auf den eine Mutter 10 aufschraubbar ist. Der Gewindebolzen 9 ist dann zweckmäßigerweise als Stehbolzen an dem zweiten Bauteil 2 durch Schweißen verankert und durchdringt eine Öffnung 11 des ersten Bauteils 1, das durch die Mutter 10 mit dem Bauteil 2 verbunden ist.

Die Mutter 10 ist in einer Aussparung 6 des ersten Bauteils 1 versenkt angeordnet und hat unten einen angeformten Sicherungsnapf 5, von dem an gegenüberliegenden Seiten Teile in Taschen 7 der Aussparung 6 ausgebogen werden, um einen Formschluß der Mutter 10 herzustellen.

Aus FIG 4 ist zu ersehen, daß der Querschnitt der Tasche 7 derart ausgebildet ist, daß der Rand des Sicherungsnapfes 5 durch Ausbiegen in der Tasche 7 in axialer und radialer Richtung spielfrei verspannbar ist. Dadurch wird auch bei einem Einsatz des Verbindungselements in einem Reaktordruckbehälter das Herausfallen eines eventuell gebrochenen Kopfes sicher vermieden.

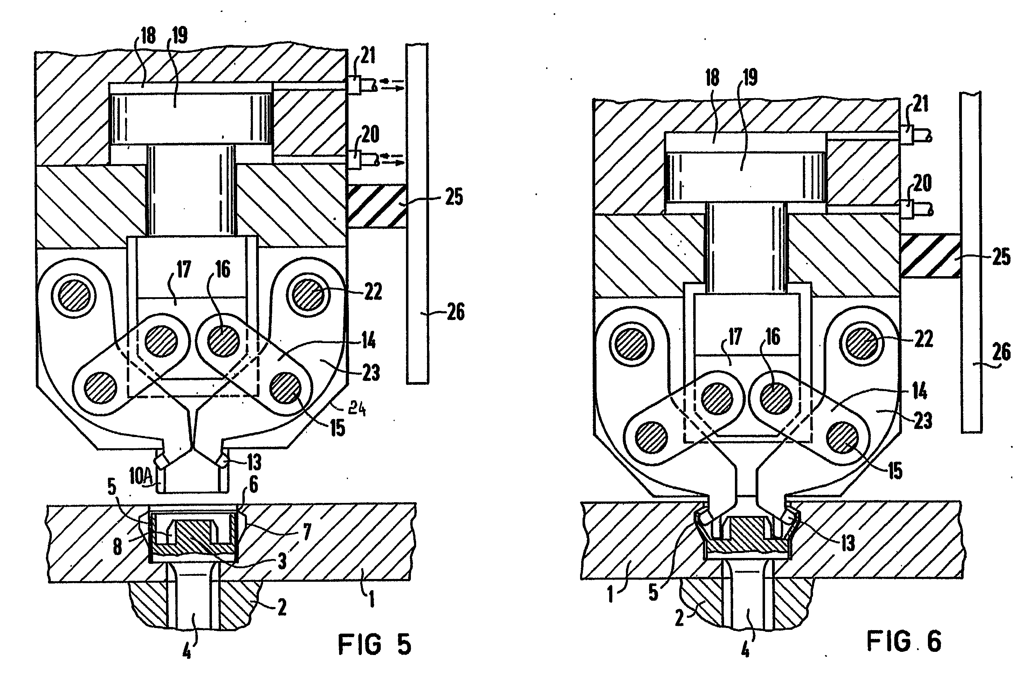

Zur Sicherung des Verbindungselements ist - wie FIG 5 zeigt - ein Werkzeug vorgesehen, dessen Grundkörper 24 einen zwischen Mehrkant und Sicherungsnapf 5 einführbaren Führungsteil 10A in Gestalt eines geschlitzten Zylinders und eine radial ausschwenkbare Biegenase 13 aufweist. In einem Gelenk 22 des Grundkörpers ist das Ende mindestens eines Schwinghebels 23 gelagert, dessen anderes Ende die in den Sicherungsnapf 5 einführbare Biegenase 13 trägt. Ein weiterer Hebel 14 ist einerseits in einem Drehpunkt 15 zwischen dem Gelenk 22 und der Biegenase 13 des Schwinghebels 23 und andererseits in einem Drehpunkt 16 an einer Stange 17 angelenkt, die mit einem Linearantrieb verbunden ist.

Als Linearantrieb dient in vorteilhafter Weise ein im Grundkörper 24 angeordneter, durch ein Druckmittel betätigbarer Zylinder 18 mit Kolben 19. Der Zylinder 18 ist mit Druckmittelleitungen 20, 21 für die Druckmittelbetätigung versehen.

Das Einbringen und die Bedienung des Werkzeuges wird mittels eines Manipulators ferngesteuert in an sich bekannter Weise vorgenommen.

Beim Einfahren des Werkzeuges ist der Zylinder 18 über die Druckmittelleitung 20 beaufschlagt, so daß sich der Kolben 19 in der oberen Lage und die Biegenasen 13 in einer zurückgezogenen Stellung befinden.

Befindet sich der Führungsteil 10A zwischen dem Mehrkant und dem Sicherungsnapf 5, so wird die Druckmittelleitung 21 beaufschlagt, der Kolben 19 bewegt sich nach unten und drückt über den Hebel 14 den Schwinghebel 23 mit der Biegenase 13 radial nach außen, so daß der Sicherungsnapf 5 an gegenüberliegenden Stellen in die Taschen 7 ausgebogen und in axialer und radialer Richtung spielfrei verspannt wird (FIG 6). Hierbei ist es zur Erzielung einer dauerhaften Verspannung vorteilhaft, wenn die Taschen 7 einen trapezförmigen Querschnitt haben.

**Patentansprüche**

1. Verdrehungssicheres mechanisches Verbindungselement für zwei miteinander zu verbindende Bauteile (1, 2), bei dem ein mit einem Kopf (3) versehener Bolzen (4) das erste Bauteil (1) durchdringt und an dem zweiten Bauteil (2) verankert ist, wobei der Kopf (3) des Verbindungselementes, an dem ein Sicherungsnapf (5) angeformt ist, in einer mit einer Vertiefung (7) versehenen Aussparung (6) des ersten Bauteils (1) versenkt angeordnet ist und durch Ausbiegen des Sicherungsnapfes (5) in die Vertiefung (7) gegen Verdrehen und axiale Verlagerung gesichert ist, **dadurch gekennzeichnet,** daß der Kopf (13) als Mehrkant ausgebildet ist und daß die Vertiefung (7) durch mindestens eine topfförmige Tasche gebildet ist, wobei durch Ausbiegen wenigstens eines Teiles des Sicherungsnapfes (5) in die Tasche ein Formschluß herstellbar ist.

2. Verbindungselement nach Anspruch 1, **dadurch gekennzeichnet,** daß der Mehrkant sternförmig angeordnete Rippen (8) aufweist.

3. Verbindungselement nach einem der vorhergehenden Ansprüche, **dadurch gekennzeichnet,** daß der Durchmesser des Mehrkants gleich oder größer ist als der Durchmesser des Bolzens (4).

4. Verbindungselement nach einem der vorhergehenden Ansprüche, **dadurch gekennzeichnet,** daß der Sicherungsnapf (5) den Mehrkant mit Abstand umgibt.

5. Verbindungselement nach einem der vorhergehenden Ansprüche, **dadurch gekennzeichnet,** daß der Querschnitt der Tasche (7) derart ausgebildet ist, daß der Rand des Sicherungsnapfes (5) durch Ausbiegen in der Tasche (7) in axialer und radialer Richtung spielfrei verspannbar ist.

6. Verbindungselement nach einem der vorhergehenden Ansprüche, **dadurch gekennzeichnet,** daß die Tasche (7) einen trapezförmigen Querschnitt hat.

7. Werkzeug zur Sicherung des Verbindungselements nach einem der vorhergehenden Ansprüche, dadurch gekennzeichnet, daß es einen zwischen dem Mehrkant und dem Sicherungsnapf (5) axial einführbaren Führungsteil (10) und eine radial ausschwenkbare Biegenase (13) aufweist.

8. Werkzeug nach Anspruch 7, **dadurch gekennzeichnet,** daß ein Grundkörper (24) einen zwischen dem Mehrkant und dem Sicherungsnapf (5) einführbaren Führungsteil (10) aufweist, daß in einem Gelenk (22) des Grundkörpers (24) das Ende mindestens eines Schwinghebels (23) gelagert ist, dessen anderes Ende eine in den Sicherungsnapf einführbare Biegenase (13) trägt, und daß ein weiterer Hebel (14) einerseits zwischen dem Gelenk (22) und der Biegenase (13) des Schwinghebels (23) und andererseits an einer Stange (17) angelenkt ist, die mit einem Linearantrieb verbunden ist.

9. Werkzeug nach Anspruch 8, **dadurch gekennzeichnet,** daß als Linearantrieb ein im Grundkörper (24) angeordneter, durch ein Druckmittel betätigbarer Zylinder (18) mit Kolben (19) dient.

**Claims**

1. Twist-proof mechanical connecting element for two components (1, 2), which are to be connected with each other, with a bolt (4), which is provided with a head (3), penetrating the first component (1) and being anchored to the second component (2), with the head (3) of the connecting element, with which a safety cup (5) is integrally formed, being arranged in a sunk position in a groove (6) of the first component (1), which groove is provided with a recess (7), and with the head (3) being secured against twisting and axial displacement by bending out the safety cup (5) into the recess (7), characterised in that the head (13) is formed as a polygon and in that the recess (7) is formed by at least one pot-like pocket, it being possible to establish a form closure by bending out at least one portion of the safety cup (5) into the pocket.

2. Connecting element according to claim 1, characterised in that the polygon has ribs (8) arranged in the form of a star.

3. Connecting element according to one of the preceding claims, characterised in that the diameter of the polygon is equal to or greater than the diameter of the bolt (4).

4. Connecting element according to one of the preceding claims, characterised in that the safety cup (5) surrounds the polygon with clearance.

5. Connecting element according to one of the preceding claims, characterised in that the cross section of the pocket (7) is formed such that by outwards bending in the pocket (7) the edge of the safety cup (5) can be braced without play in the axial and radial direction.

6. Connecting element according to one of the preceding claims, characterised in that the pocket (7) has a trapezoidal cross section.

7. Tool for securing the connecting element according to one of the preceding claims, characterised in that it has a guide part (10), which can be inserted axially between the polygon and the safety cup (5), and a radially outwardly pivotable bent lug (13).

8. Tool according to claim 7, characterised in that a base body (24) has a guide part (10), which can be inserted between the polygon and the safety cup (5), in that the end of at least one rocking lever (23) is mounted in a joint (22) of the base body (24), the other end of said lever supporting a bent lug (13) which can be inserted into the safety cup, and in that a further lever (14) is articulated at one end between the joint (22) and the bent lug (13) of the rocking lever (23) and at the other end to a rod (17) which is connected with a linear drive.

9. Tool according to claim 8, characterised in that a cylinder (18) with piston (19), arranged in the base body (24) and actuable by a pressure medium, serves as linear drive.

**Revendications**

1. Elément de liaison mécanique de blocage en rotation pour deux composants (1, 2) devant être réunis l'un à l'autre, et dans lequel un boulon (4) muni d'une tête (3) traverse le premier composant (1) et est ancré dans le second composant (2), la tête (3) de l'élément de liaison, sur laquelle est formée par moulage une coupelle de blocage (5), étant disposée en renfoncement dans un évidement (6) du premier composant (1), muni d'un renfoncement (7), et est bloquée contre toute rotation et contre tout déplacement axial par refoulement avec pliage de la coupelle de blocage (5) dans le renfoncement (7), caractérisé par le fait que la tête (3) est réalisée sous la forme d'un élément polygonal et que le renfoncement (7) est formé par une poche en forme de pot, le refoulement avec pliage d'au moins une partie de la coupelle de blocage (5) dans la poche établissant une liaison par formes complémentaires.

2. Elément de liaison suivant la revendication 1, caractérisé par le fait que l'élément polygonal comporte des nervures (8) disposées en forme d'étoile.

3. Elément de liaison suivant l'une des revendications précédentes, caractérisé par le fait que le diamètre de l'élément polygonal est égal ou supérieur au diamètre du boulon (4).

4. Elément de liaison suivant l'une des revendications précédentes, caractérisé par le fait que la coupelle de blocage (5) entoure l'élément polygonal à une certaine distance.

5. Elément de liaison suivant l'une des revendications précédentes, caractérisé par le fait que la section transversale de la poche (7) est agencée de telle sorte que le bord de la coupelle de blocage (5) peut être serré sans jeu dans une direction axiale et dans une direction radiale par refoulement avec pliage dans la poche (7).

6. Elément de liaison suivant l'une des revendications précédentes, caractérisé par le fait que la poche (7) possède une section transversale de forme trapézoïdale.

7. Outil pour assurer la formation de l'élément de liaison suivant l'une des revendications précédentes, caractérisé par le fait qu'il comporte une partie de guidage (10), qui peut être introduite axialement entre l'élément polygonal et la coupelle de blocage (5) et possède un bec de pliage (13) pouvant être écarté radialement.

8. Outil suivant la revendication 7, caractérisé par le fait qu'un corps de base (24) possède une partie de guidage (10) pouvant être introduite entre l'élément polygonal et la coupelle de blocage (5), que dans une articulation (22) du corps de base (24) est tourillonnée l'extrémité d'au moins un levier pivotant (23), dont l'autre extrémité porte un bec de pliage (13) pouvant être inséré dans la coupelle de blocage, et qu'un autre levier (14) est articulé, d'une part, entre l'articulation (22) et le bec de pliage (13) du levier pivotant (23), et, d'autre part, sur une barre (17), qui est reliée à un dispositif d'entraînement linéaire.

9. Outil suivant la revendication 8, caractérisé par le fait qu'on utilise, comme dispositif d'entraînement linéaire, un cylindre (18) disposé dans le corps de base (24) et pouvant être actionné par un fluide sous pression et comportant un piston (19).

FIG 1

FIG 2

FIG 3

FIG 4

FIG 5

FIG 6

EP 0 268 817 B1